# EUROPÄISCHE PATENTSCHRIFT

(11) **EP 3 693 335 B1**
(45) Veröffentlichungstag und Bekanntmachung des Hinweises auf die Patenterteilung: **18.08.2021**
(21) Anmeldenummer: 19155596.0
(22) Anmeldetag: 05.02.2019
(51) Int. Cl.: B68G 11/00

(54) **POLSTEREINRICHTUNG**
PADDING DEVICE
SYSTEME DE REMBOURRAGE

(43) Veröffentlichungstag der Anmeldung: 12.08.2020
(73) Patentinhaber: Bauer, Wolfgang, 78315 Radolfzell (DE)
(72) Erfinder: Bauer, Wolfgang, 78315 Radolfzell (DE)
(74) Vertreter: Clemens, Gerhard

(56) Entgegenhaltungen:
- EP-A1- 2 789 270
- WO-A1-2015/012859
- US-A1- 2009 288 259
- US-A1- 2018 020 842

## Beschreibung

### TECHNISCHES GEBIET

Die vorliegende Erfindung betrifft eine Polstereinrichtung wie Polsterauflage, Polsterkissen oder dergleichen mit einer Oberseite, einer Unterseite und zwischen Oberseite und Unterseite außenumfangsmäßig umlaufend vorhandenen Seitenwänden mit einer die Oberseite, die Seitenwände und die Unterseite umgebenden Bezugsschicht, einer unter der oberseitigen Bezugsschicht angeordneten Polsterschicht.

### STAND DER TECHNIK

Aus der DE 10 2017 000 649 A1 ist ein Polster für den Einsatz in Bereichen mit hoher Feuchtigkeit bekannt, dass einen ersten Schichtkörper mit einem wasserbeständigen Überzug aufweist. An der Unterseite und/oder Oberseite des ersten Schichtkörpers sind Belüftungsausnehmungen vorhanden, die eine Belüftungsstruktur ausbilden. Weiterhin ist ein zweiter Schichtkörper vorhanden, wobei der erste Schichtkörper einen höheren Härtegrad aufweist als der zweite Schichtkörper und der erste Schichtkörper und/oder der zweite Schichtkörper durchgängige Belüftungsöffnungen aufweist. Ein derartiges Polster weist einen guten Liegekomfort auf und zeigt gute Trocknungseigenschaften, die einer Schimmel- oder Bakterienbildung im dauerhaften Einsatz entgegenwirken.

In der US 4,980,936 A wird ein flexibles Pad aus Schaumstoff für den Einsatz im Outdoorbereich beschrieben. Auf dem Pad sind ober- und/ oder unterseitig vertiefende Prägungen vorhanden, die an der Oberfläche des Pads kanalartige oder rasterartige Strukturen ausbilden. Die Strukturen weisen dabei schräge Flanken auf, was zu einer Erhöhung der Nachgiebigkeit und damit erhöhten Polsterwirkung führt. Die Strukturen sind weiterhin so angeordnet, dass eine freie Luftkonfektion, insbesondere an der Unterseite des Pads bei einer oberseitigen Belastung möglichst unterbunden wird, sodass Personen, welche das Pad als Unterlage nutzen (beispielsweise zum Schlafen) nicht auskühlen. Dies wird dadurch erreicht, dass die Strukturen kammerartig ausgebildet sind. Die Strukturen sind zudem so ausgebildet, dass sie beim Zusammenrollen oder Zusammenfalten des Pads ineinander greifen, sodass das Pad platzsparend komprimierbar ist.

In der US 2004/0237206 A1 ist ein Polster mit zwei Schichten aus elastischem Schaum, die unterschiedliche Härtegrade aufweisen, beschrieben. Beide Schichten weisen in einem vorgegebenen orthogonalen Raster angeordnete von oben nach unten durchgehende Ausnehmungen auf. US 2018/020842 A1 offenbart eine Matte mit einer PCM Mikrokapseln aufweisenden Funktionsschicht.

### DARSTELLUNG DER ERFINDUNG

Ausgehend von dem genannten Stand der Technik liegt der vorliegenden Erfindung die Aufgabe bzw. das technische Problem zugrunde, eine Polstereinrichtung der eingangs genannten Art anzugeben, die eine dauerhaft zuverlässige Funktion gewährleistet, einen hohen Sitz-/Liege Komfort gewährleistet, einen Schimmel- und Bakterienbefall auch bei Einsatz unter rauen, feuchten Umweltbedingungen, insbesondere im maritimen Bereich, verhindert und gleichzeitig einer dauerhaften Durchfeuchtung des Innenraumes der Polstereinrichtung infolge von Regenwasser, Spritzwasser oder Kondenswasserbildung entgegenwirkt, d. h. schnelltrocknende Eigenschaften aufweist.

Die erfindungsgemäße Polstereinrichtung ist durch die Merkmale des unabhängigen Anspruchs 1 gegeben. Vorteilhafte Ausgestaltungen und Weiterbildungen sind Gegenstand der von dem unabhängigen Anspruch 1 direkt oder indirekt abhängigen Ansprüche.

Die erfindungsgemäße Polstereinrichtung zeichnet sich demgemäß dadurch aus, dass die Bezugsschicht zumindest oberseitig lichtdurchlässig ausgebildet ist, die Polsterschicht zumindest oberseitig lichtdurchlässig ausgebildet ist, unterhalb der Polsterschicht zumindest bereichsweise eine Wärme absorbierende, insbesondere flexible, Absorberschicht angeordnet ist und unterhalb oder oberhalb der Absorberschicht ein mit der Absorberschicht in Wirkverbindung stehende solarthermische Speicherschicht angeordnet ist, die PhasenWechselmaterial, sogenanntes PCM-Material, aufweist, oder unterhalb der Polsterschicht zumindest bereichsweise eine Funktionsschicht aus integriertem Absorbermaterial und solarthermischem Phasenwechselmaterial, sogenanntes PCM-Material, angeordnet ist.

Eine besonders bevorzugte Ausgestaltung der erfindungsgemäßen Polstereinrichtung zeichnet sich dadurch aus, dass unterhalb der solarthermischen Speicherschicht oder unterhalb der Funktionsschicht eine Isolationsschicht angeordnet ist.

Eine besonders bevorzugte vorteilhafte Weiterbildung der erfindungsgemäßen Polstereinrichtung zeichnet sich dadurch aus, dass die Polsterschicht als 3D-Abstandsgewirke oder Abstandstextilgewirke und/oder die Isolationsschicht als ein- oder mehrlagiges Vlies oder als 3D-Abstandsgewirke oder Abstandstextilgewirke ausgebildet ist.

Mit der erfindungsgemäßen Polstereinrichtung wird ein solarthermisches Liege- oder Sitzpolster mit Wärmespeicherung zur Verfügung gestellt, in dem die Luft zirkulieren kann, Lichtstrahlen eindringen können, um das PCM-Material energetisch aufzuladen, wobei die Polstereinrichtung bei Belastungswechsel oder Druckbeaufschlagung Wärme an ihre Oberfläche abgibt und diese somit aufwärmt. Gleichzeitig kann die Luft zirkulieren, um einen Nässestau sowie einem Schimmel- und Bakterienbefall vorzubeugen, was durch die Wärmeabgabe des PCM-Materials unterstützt wird.

Die erfindungsgemäße Ausbildung der Polsterschicht als Abstandsgewirk hat den Vorteil, dass sie weniger Feuchtigkeit ansammelt und es luft- und lichtdurchlässig ist. Die Luftdurchlässigkeit ist vorteilhaft, da die Wärme aus dem PCM-Speicher an die Oberseite der Polstereinrichtung aufsteigen kann. Mit der Lichtdurchlässigkeit der Polsterschicht als Abstandsgewirk ist gewährleistet, dass die Wärmestrahlung auch die Absorberschicht bzw. die Funktionsschicht erreicht. Die Dicke der Polsterschicht kann beispielsweise im Bereich zwischen 2-10 cm, insbesondere im Bereich zwischen 2-5 cm, liegen. Die Polsterschicht kann auch mehrlagig ausgebildet sein.

Um die Transparenz der als 3D-Gewirke ausgebildeten Polsterschicht zu verbessern, werden die vorhandenen Deckschichten des Gewirkes, die üblicherweise als Multifilamente ausgebildet sind, als Monofilamente ausgebildet.

Die Ausbildung der Speicherschicht in konstruktiver Hinsicht kann erfindungsgemäß in unterschiedlichen Variationen der Einbindung des PCM-Materials innerhalb der Schicht erfolgen.

Eine besonders bevorzugte erste Ausgestaltung zeichnet sich dadurch aus, dass die Speicherschicht/Funktionsschicht als ein- oder mehrlagiges PCM-Gestrick ausgebildet ist.

Eine weitere besonders bevorzugte Ausgestaltung zeichnet sich dadurch aus, dass die Speicherschicht/Funktionsschicht geschlossene Hohlräume aufweist, in denen, insbesondere pulverförmliches, PCM-Material eingearbeitet/eingewickelt vorhanden ist.

Eine besonders vorteilhafte Ausgestaltung, die eine hohe Energieeffizienz aufweist und eine dauerhaft zuverlässige Funktion gewährleistet, zeichnet sich dadurch aus, dass die Hohlräume als rasterförmig vorhandene, insbesondere zwischen zwei die Hohlräume begrenzenden Schichten angeordnete geschlossene Schlauch-/Kanal Strukturen, die mit PCM-Material gefüllt sind, ausgebildet sind.

Eine weitere sehr vorteilhafte konstruktive erfindungsgemäße Variante, die eine hohe Energieeffizienz und gleichzeitig eine dauerhaft zuverlässige Positionierung der Speicherschicht/Funktionsschicht innerhalb der Polstereinrichtung gewährleistet, zeichnet sich dadurch aus, dass die Hohlräume als rastermäßig vorhandene, insbesondere zwischen 2D-Hohlräumen begrenzenden, Schichten angeordnete geschlossene Noppenstrukturen ausgebildet sind, die mit PCM-Material befüllt sind.

Eine besonders bevorzugte erfindungsgemäße Ausgestaltung der Polstereinrichtung, die eine dauerhaft zuverlässige Funktion gewährleistet und eine sichere Positionierung der Speicher- oder Funktionsschicht innerhalb der Polstereinrichtung gewährleistet, zeichnet sich dadurch aus, dass die Polsterschicht unterseitig nach unten offene, insbesondere eingeprägte, Ausnehmungen aufweist, die zumindest bereichsweise die Außenumfangskontur der Schlauch-/Kanalstruktur oder der Noppenstruktur der Speicherschicht oder Funktionsschicht aufnehmen und/ oder die Isolationsschicht oberseitig nach oben offene, insbesondere eingeprägte, Ausnehmungen aufweist, die zumindest bereichsweise die Außenumfangskontur der Schlauch-/Kanalstruktur oder der Noppenstruktur der Speicherschicht oder Funktionsschicht aufweist.

Eine besonders bevorzugte Ausgestaltung der erfindungsgemäßen Polstereinrichtung, die eine wirtschaftliche und effiziente Herstellung ermöglicht und eine hohe Energieeffizienz umsetzt und einen konstruktiv besonders einfachen Aufbau der Polstereinrichtung raumsparend ermöglicht, sodass die weiteren Funktionsschichten wie Polsterschicht und Isolationsschicht bezüglich der gewünschten Höhe bzw. Dicke ausgestaltet werden können, zeichnet sich dadurch aus, dass die Speicherschicht/Funktionsschicht eine, insbesondere flexible, dünne, Tragschicht, die flächig oder gitternetzartig ausgebildet ist, aufweist, auf/an der das PCM-Material, insbesondere in einem Siebdruckverfahren, auf/ angebracht vorhanden ist.

Die Tragschicht besteht in vorteilhafter Art und Weise aus Kunststoff, insbesondere Polyester.

Erfindungsgemäß zeichnet sich die flächige Tragschicht in einer vorteilhaften Ausgestaltung dadurch aus, dass die Tragschicht rastermäßig angeordnete flache Stege mit zwischen den Stegen vorhandenen Vertiefungen mit den durch die Stege bestimmten und vorgegebenen Umfangskonturen aufweist, wobei die Vertiefungen flächenmäßig mit dem PCM-Material befüllt sind.

Eine vorteilhafte alternative Ausgestaltung ist dadurch gekennzeichnet, dass die gitternetzartige Tragschicht innerhalb einer PCM-Materialschicht angeordnet ist.

Die Absorberschicht kann als ein-/oder mehrlagiges Vlies oder Gewebeeinheit ausgebildet sein.

Eine besonders vorteilhafte Ausgestaltung, die die Energieeffizienz der erfindungsgemäßen Polstereinrichtung deutlich verbessert, zeichnet sich dadurch aus, dass die Absorberschicht/Funktionsschicht eine Licht absorbierende Farbe, insbesondere schwarze Farbe, aufweist. Durch die schwarze Farbe wird die effiziente Energieaufnahme der Absorberschicht/Funktionsschicht zur Energieaufladung des PCM-Materials optimiert.

Eine besonders bevorzugte Ausgestaltung zeichnet sich dadurch aus, dass unterhalb der Isolationsschicht die Bezugsschicht durch eine Abstandsschicht mit erhöhten Werten hinsichtlich Festigkeit, Abriebbeständigkeit und Luftdurchlässigkeit verwendet wird.

Eine vorteilhafte weitere Ausgestaltung der erfindungsgemäßen Polstereinrichtung, die eine dauerhaft zuverlässige Funktionalität gewährleistet, zeichnet sich dadurch aus, dass die Bezugsschicht als Gewebeschicht, insbesondere aus Textil-oder Kunststofffasern, ausgebildet ist und oberseitig mit lichtdurchlässigem Material, insbesondere mit Silikon oder Kunststoff, insbesondere Polyuretan, beschichtet ist, wobei die Beschichtung aus den genannten Materialien so ausgebildet ist, das eine möglichst große Lichtdurchlässigkeit gewährleistet wird.

Eine besondere Ausgestaltung zur Erhöhung der Energieeffizienz zeichnet sich dadurch aus, dass die Abstandsgewirke der Polyesterschicht und/oder Isolationsschicht zumindest eine Deckschicht, insbesondere zwei ober- und unterseitige angeordnete Deckschichten, aufweisen, die aus Monofilamenten gebildet sind.

Bei der erfindungsgemäßen Polstereinrichtung sind grundsätzlich bezüglich der Abführung der innerhalb der Polstereinrichtungen anfallenden Wasserablagerungen bzw. -ansammlungen aufgrund von Umwelteinflüssen nach außen, um eine Schimmel- und oder Bakterienbildung zu vermeiden, Abführungen nach oben oder nach unten grundsätzlich möglich.

Eine grundsätzlich anders geartete erfindungsgemäße vorteilhafte und bevorzugte Ausgestaltung zeichnet sich dadurch aus, dass die Bezugsschicht als Membranschicht ausgebildet ist, die einerseits wasserdicht ausgebildet ist, sodass kein Wasser in das Innere der Polstereinrichtung eindringen kann, und andererseits dampfdurchlässig ist, sodass bei Erwärmung entstehender Dampf nach außen diffundieren kann, oder unter der Bezugsschicht eine derartige Membranschicht separat angeordnet ist, sodass keinerlei Feuchtigkeit in die Polstereinrichtung eindringen kann. Auch eventuell vorhandene Schließ- bzw. Öffnungsmechanismen der Bezugsschicht müssen dann der Wasserdichtheit genügen.

Eine bevorzugte Weiterbildung zeichnet sich dadurch aus, dass die Speicherschicht/Funktionsschicht von einer wasserundurchlässigen aber dampfdurchlässigen Membranschicht zumindest oberseitig oder ober- und unterseitig umgeben ist.

Eine weitere vorteilhafte Ausführungsvariante der erfindungsgemäßen Polstereinrichtung, insbesondere im Hinblick auf den schichtweisen Aufbau der Funktionsschichten besteht darin, dass die Absorberschicht sowohl oberhalb als auch unterhalb der Speicherschicht angeordnet ist.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im Folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
Fig. 1 starke schematisierte Darstellung eines ersten Ausführungsbeispiels einer Polstereinrichtung im Querschnitt mit einer die Polstereinrichtung umgebenden Bezugsschicht mit folgenden innerhalb der Polstereinrichtung vorhandenen, von der Bezugsschicht umgebenen Funktionsschichten: einer Polsterschicht, einer Absorberschicht, einer solarthermischen Speicherschicht, einer Isolationsschicht,
Fig. 2 stark schematisierte Darstellung eines zweiten Ausführungsbeispiels einer Polstereinrichtung im Querschnitt mit einer die Polstereinrichtung umgebenen Betriebsschicht mit folgenden innerhalb der Polstereinrichtung vorhandenen Funktionsschichten: einer Polsterschicht, einer Funktionsschicht, die die Eigenschaften einer Absorberschicht und einer solarthermischen Speicherschicht integral aufweist, und einer Isolationsschicht,
Fig. 3 stark schematisierte Darstellung eines dritten Ausführungsbeispiels einer Polstereinrichtung im Querschnitt gemäß Fig. 1, wobei auf der Unterseite der Polstereinrichtung anstelle der Bezugsschicht eine Abstandsschicht angeordnet ist.
Fig. 4 stark schematisierte Perspektivdarstellung einer solarthermischen Speicherschicht der Polstereinrichtung gemäß Fig. 1, wobei die Speicherschicht mit dem PCM-Material als mehrlagiges Gewirke ausgebildet ist,
Fig. 5 stark schematisierte Perspektivdarstellung einer solarthermischen Speicherschicht der Polstereinrichtung gemäß Fig. 1, wobei die Speicherschicht mit dem PCM-Material gefüllte Schlauch strukturen aufweist,
Fig. 6a, b stark schematisierte Perspektivdarstellung (Fig. 6a) und Schnittdarstellung (Fig. 6b) einer solarthermischen Speicherschicht der Polstereinrichtung gemäß Fig. 1, wobei die Speicherschicht mit PCM-Material gefüllte Noppen aufweist,
Fig. 7a, b stark schematisierte Perspektivdarstellung (Figur 7a) und Schnittdarstellung (Figur 7b) einer solarthermischen Speicherschicht der Polstereinrichtung gemäß Fig. 1, wobei die Speicherschicht eine flexible flächige Tragschicht aufweist mit rastermäßig verlaufenden Stegen und zwischen den Stegen vorhandenen Vertiefungen, wobei die Vertiefungen mit PCM-Material befüllt sind und
Fig. 8a, b stark schematisierte Perspektivdarstellung (Figur 8a) und Schnittdarstellung (Figur 8b) einer solarthermischen Speicherschicht der Polstereinrichtung gemäß Fig. 1, wobei die Speicherschicht eine flexible gitternetzartige Tragschicht aufweist, die innerhalb einer PCM-Materialschicht angeordnet ist.

### WEGE ZUM AUSFÜHREN DER ERFINDUNG

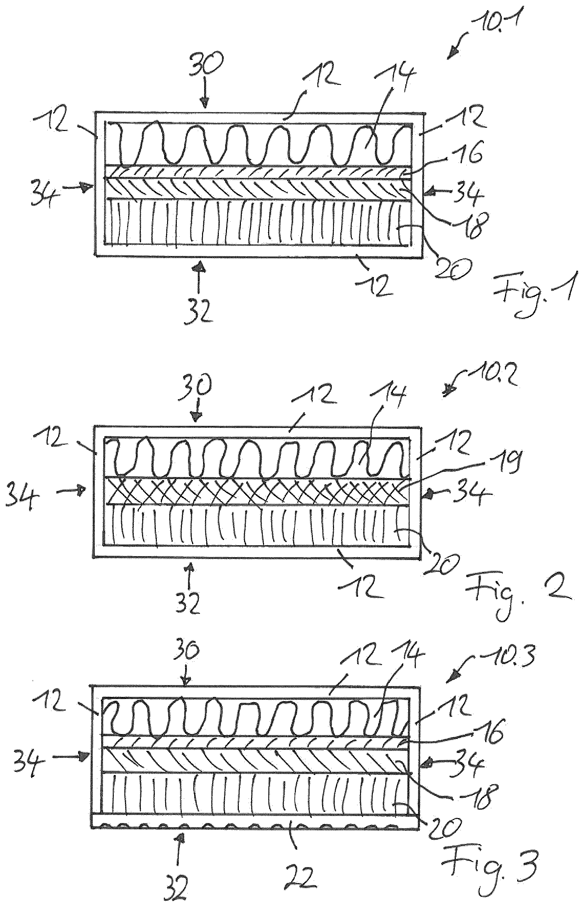

In einem ersten Ausführungsbeispiel einer Polstereinrichtung 10.1 gemäß Fig. 1 ist ein Querschnitt mit folgendem Aufbau der Polstereinrichtung 10.1 dargestellt. Die im Ausführungsbeispiel in Querschnitt quaderförmige ausgebildete Polstereinrichtung 10.1 weist eine Oberseite 30, eine Unterseite 32 und umfangsmäßig umlaufende Seitenwände 34 auf.

Die Oberseite 30, Unterseite 32 und Seitenwände 34 sind von einer Bezugsschicht 12 vollumfänglich umgeben, die innenseitig einen schichtweisen Aufbau von oben nach unten mit folgenden Funktionsschichten aufweist:
Unterhalb der oberseitigen Bezugsschicht 12 ist eine Polsterschicht 14 vorhanden, unterhalb derer eine Absorberschicht 16 angeordnet ist.

Sowohl die Oberseite der Bezugsschicht 12 als auch die Polsterschicht 14 ist lichtdurchlässig ausgebildet. Dadurch können Lichtstrahlen auf die Absorberschicht 16 auftreffen, die deren Wärmeenergie aufnimmt und an eine darunter liegende solarthermische Speicherschicht 18 abgibt. Die solarthermische Speicherschicht 18 weist Phasenwechselmaterial sogenanntes PCM-Material (phase change material) auf, das bei der Beaufschlagung mit Wärmeenergie diese speichert und bei Bedarf wieder abgibt. Die Abgabe der Wärmeenergie erfolgt beispielsweise durch Druckbeaufschlagung des Materials.

Unterhalb der Speicherschicht 18 ist eine Isolationsschicht 20 angeordnet, die für eine Isolation der wärmeabgebenden Speicherschicht 18 nach unten sorgt.

Unterhalb der Isolationsschicht 20 schließt die Bezugsschicht 12 die Polstereinrichtung 10.1 außenumfangsmäßig ab.

Ein zweites Ausführungsbeispiel einer erfindungsgemäßen Polstereinrichtung 10.2 ist in Fig. 2 dargestellt. Dieses Ausführungsbeispiel unterscheidet sich in seinem prinzipiellen Aufbau von dem Ausführungsbeispiel gemäß Fig. 1 dadurch, dass die Absorberschicht 16 und die solarthermische Speicherschicht 18 in einer Funktionsschicht 19 integriert vorhanden sind.

Ein drittes Ausführungsbeispiel einer erfindungsgemäßen Polstereinrichtung 10.3 ist in Fig. 3 dargestellt. Dieses Ausführungsbeispiel unterscheidet sich in seinem prinzipiellen Aufbau von dem Ausführungsbeispiel gemäß Fig. 1 dadurch, dass an der Unterseite 32 anstelle der Bezugsschicht 12 eine Abstandsschicht 22 vorhanden ist.

Die Einbringung/Aufbringung/Einarbeitung/Einfüllung des PCM-Materials in/auf/an der/die Speicherschicht 18 kann konstruktiv in unterschiedlichster Weise umgesetzt werden.

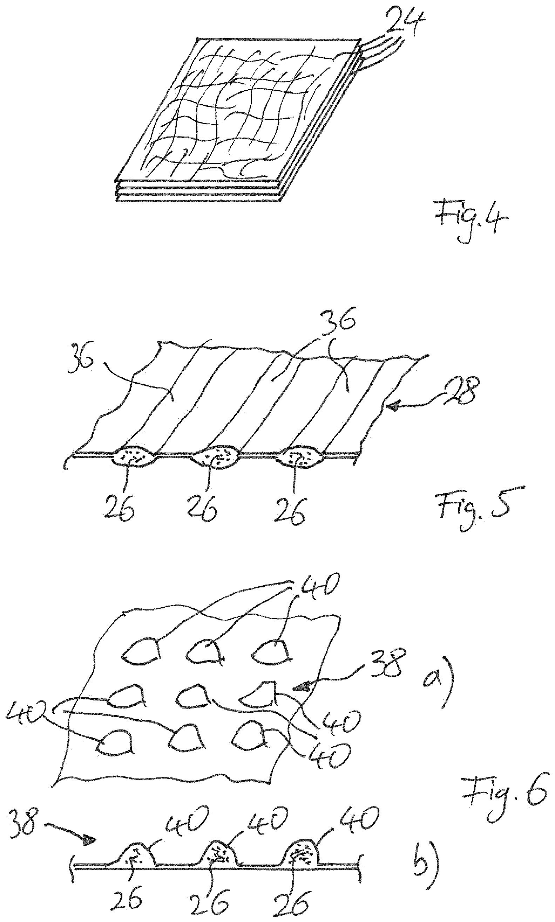

Gemäß dem Ausführungsbeispiel von Fig. 4 ist das PCM-Material innerhalb eines Gewebevlies oder Gewirkes 24 integral eingewebt oder eingebracht vorhanden, wobei das Gewebeflies oder Gewirk 24 auch mehrlagig ausgebildet sein kann.

In dem Ausführungsbeispiel gemäß Fig. 5 weist die Speicherschicht 18 eine flächige Schlauchstruktur 28 auf, in deren Hohlräume 26 pulverförmiges PCM-Material-Pulver eingebracht ist. Die Schlauchstruktur 28 weist mehrere in einem vorgegebenen Rastermaß parallel beabstandete Schlaucheinheiten 36 bzw. Kanaleinheiten auf, die von einer Oberschicht und Unterschicht dichtend umgeben sind.

Die Figuren 6a, b zeigen ein weiteres Ausführungsbeispiel einer Ausbildung einer Speicherschicht 18, die eine Noppenstruktur 28 mit rastermäßig angeordneten Noppen 40 aufweist, die oberseitig und unterseitig mit einer Ober- und Unterschicht umgeben sind, wobei die Innenhohlräume der Noppen 40 mit PCM-Material gefüllt sind.

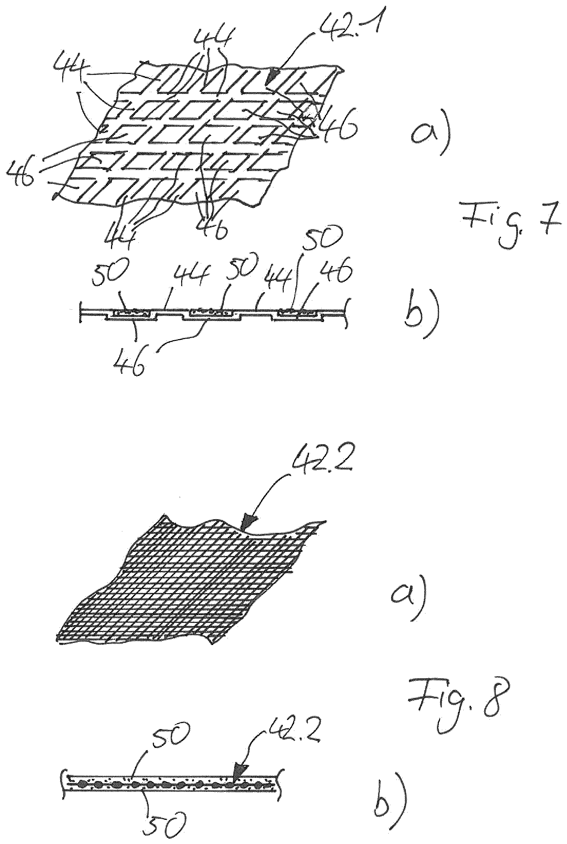

Die Figuren 7a, b zeigen eine konstruktive besonders einfach umzusetzende und vorteilhafte Ausführungsform einer Speicherschicht 18, die eine dünne flexible flächige Tragschicht 42.1, beispielsweise aus Polyester, aufweist, die oberseitig flächenmäßig mit PCM-Material versehen ist. Die Aufbringung des PCM-Materials kann beispielsweise in einem Siebdruckverfahren erfolgen. Die extrem dünne Tragschicht 42.1 weist rasterförmig verlaufende Stege 44 auf, die beispielsweise ein polygonales oder rundes Vertiefungsmuster mit polygonalen oder runden Vertiefungen 46 bilden, die mit PCM-Material ausgefüllt werden. Alternativ kann die Tragschicht 42.1 gemäß den Figuren 8a, b als flexible dünne Gitternetzstruktur 48 innerhalb einer dünnen PCM-Materialschicht angeordnet sein.

Diese Ausführungsform ist besonders energieeffizient, wirtschaftlich herstellbar, flexibel, besitzt einen dünnen Aufbau und ist daher für die erfindungsgemäße Polstereinrichtung vorteilhaft einsetzbar.

## Patentansprüche

1. Polstereinrichtung (10), wie Polsterauflage, Polsterkissen oder dergleichen mit
- einer Oberseite (30), einer Unterseite (32) und zwischen Oberseite (30) und Unterseite (32) außenumfangsmäßig umlaufend vorhandenen Seitenwänden (34) mit
- einer die Oberseite (30), die Seitenwände (34) und die Unterseite (32) umgebenden Bezugsschicht (12),
- einer unter der oberseitigen Bezugsschicht (12) angeordneten Polsterschicht (14), wobei
- die Bezugsschicht (12) zumindest oberseitig lichtdurchlässig ausgebildet ist,
- die Polsterschicht (14) zumindest oberseitig lichtdurchlässig ausgebildet ist,
- unterhalb der Polsterschicht (14) zumindest bereichsweise eine Wärme absorbierende, insbesondere flexible, Absorberschicht (16) angeordnet ist und unterhalb oder oberhalb der Absorberschicht (16) ein mit der Absorberschicht (16) in Wirkverbindung stehende solarthermische Speicherschicht (18), die Phasenwechselmaterial, sogenanntes PCM-Material, aufweist, angeordnet ist, oder unterhalb der Polsterschicht (14) zumindest bereichsweise eine Funktionsschicht (19) aus integriertem Absorbermaterial und solarthermischen Phasenwechselmaterial, sogenanntes PCM-Material, ausgebildet ist.

2. Polstereinrichtung nach Anspruch 1,
- **dadurch gekennzeichnet, dass**
- unterhalb der solarthermischen Speicherschicht (18) oder der Funktionsschicht (19) eine Isolationsschicht (20) angeordnet ist.

3. Polstereinrichtung nach Anspruch 1 oder 2,
- **dadurch gekennzeichnet, dass**
- die Polsterschicht (14) als 3D-Abstandsgewirke oder Abstandstextilgewirke und/oder die Isolationsschicht (20) als ein- oder mehrlagiges Vlies oder als 3D-Abstandsgewirke oder Abstandstextilgewirke ausgebildet ist.

4. Polstereinrichtung nach Anspruch 1-3,
- **dadurch gekennzeichnet, dass**
- die Speicherschicht (18)/Funktionsschicht (19) als ein- oder mehrlagiges PCM-Gestrick ausgebildet ist.

5. Polstereinrichtung nach Anspruch 1-3,
- **dadurch gekennzeichnet, dass**
- die Speicherschicht (18)/Funktionsschicht (19) geschlossene Hohlräume aufweist, in denen, insbesondere pulverförmliches, PCM-Material eingearbeitet/eingefüllt vorhanden ist.

6. Polstereinrichtung nach Anspruch 5,
- **dadurch gekennzeichnet, dass**
- die Hohlräume als rasterförmig vorhandene, insbesondere zwischen zwei die Hohlräume begrenzenden, Schichten angeordnete geschlossene Schlauch-/Kanalstrukturen, die mit PCM-Material befüllt sind, ausgebildet sind.

7. Polstereinrichtung nach Anspruch 5,
- **dadurch gekennzeichnet, dass**
- die Hohlräume als rastermäßig vorhandene, insbesondere zwischen zwei die Hohlräume begrenzenden, Schichten angeordnete geschlossene Noppenstrukturen, die mit PCM-Material gefüllt sind, ausgebildet sind.

8. Polstereinrichtung nach den Ansprüchen 5-7,
- **dadurch gekennzeichnet, dass**
- die Polsterschicht (14) unterseitig nach unten offene, insbesondere eingeprägte, Ausnehmungen aufweist, die zumindest bereichsweise die Außenumfangskontur der Schlauch-/Kanalstruktur oder der Noppenstruktur der Speicherschicht (18) oder Funktionsschicht (19) aufnehmen und/oder die Isolationsschicht (20) oberseitig nach oben offene, insbesondere eingeprägte, Ausnehmungen aufweist, die zumindest bereichsweise die Außenumfangskontur der Schlauch-/Kanalstruktur oder der Noppenstruktur der Speicherschicht (18) oder Funktionsschicht (19) aufnehmen.

9. Polstereinrichtung nach den Ansprüchen 1-3,
- **dadurch gekennzeichnet, dass**
- die Speicherschicht (18)/Funktionsschicht (19) eine, insbesondere flexible, Tragschicht, die flächig oder gitternetzartig ausgebildet ist, aufweist, auf/an der das PCM-Material auf-/angebracht vorhanden ist.

10. Polstereinrichtung nach Anspruch 9,
- **dadurch gekennzeichnet, dass**
- die Tragschicht aus Kunststoff, insbesondere Polyester, besteht.

11. Polstereinrichtung nach Anspruch 9 oder 10,
- **dadurch gekennzeichnet, dass**
- die flächige Tragschicht rastermäßig angeordnete Stege mit zwischen den Stegen vorhandenen Vertiefungen mit den durch die Stege bestimmten und vorgegebenen Umfangskonturen aufweist, wobei die Vertiefungen flächenmäßig mit dem PCM-Material befüllt sind.

12. Polstereinrichtung nach Anspruch 9 oder 10,
- **dadurch gekennzeichnet, dass**
- die gitternetzartige Tragschicht innerhalb einer PCM-Materialschicht angeordnet ist.

13. Polstereinrichtung nach einem oder mehreren der vorstehenden Ansprüche,
- **dadurch gekennzeichnet, dass**
- die Absorberschicht (16) als ein -/oder mehrlagiges Vlies oder Gewebeeinheit ausgebildet ist.

14. Polstereinrichtung nach einem oder mehreren der vorstehenden Ansprüche,
- **dadurch gekennzeichnet, dass**
- die Absorberschicht (16)/Funktionsschicht (19) eine Licht absorbierende Farbe, insbesondere schwarze Farbe, aufweist.

15. Polstereinrichtung nach einem oder mehreren der vorstehenden Ansprüche,
- **dadurch gekennzeichnet, dass**
- unterhalb der Isolationsschicht (20) eine Abstandsschicht (22) angeordnet ist.

16. Polstereinrichtung nach einem oder mehreren der vorstehenden Ansprüche,
- **dadurch gekennzeichnet, dass**,
- die Bezugsschicht (12) als Gewebeschicht oder Trägerschicht, insbesondere aus Textil- oder Kunststofffasern, ausgebildet ist und oberseitig mit lichtdurchlässigem Material, insbesondere Silikon oder Kunststoff, insbesondere Polyuretan, beschichtet ist.

17. Polstereinrichtung nach Anspruch 3,
- **dadurch gekennzeichnet, dass**
- die Abstandsgewirke der Polsterschicht (14) und/oder Isolationsschicht (14, 20) zumindest eine Deckschicht aufweisen, die aus Monofilamenten gebildet ist.

18. Polstereinrichtung nach einem oder mehreren der vorstehenden Ansprüche,
- **dadurch gekennzeichnet, dass**
- die Bezugsschicht (12) als Membranschicht ausgebildet ist, die einerseits wasserdicht ausgebildet ist, sodass kein Wasser in das Innere der Polstereinrichtung (10) eindringen kann, und andererseits dampfdurchlässig ist, sodass bei Erwärmung entstehender Dampf nach außen diffundieren kann, oder unter der Bezugsschicht (12) eine derartige Membranschicht separat angeordnet ist, sodass keinerlei Feuchtigkeit in die Polstereinrichtung eindringen kann.

19. Polstereinrichtung nach einem oder mehreren der vorstehenden Ansprüche,
- **dadurch gekennzeichnet, dass**
- die Speicherschicht (18)/Funktionsschicht (19) von einer wasserundurchlässigen aber dampfdurchlässigen Membranschicht zumindest oberseitig oder ober- und unterseitig umgeben ist.

20. Polstereinrichtung nach einem oder mehreren der vorstehenden Ansprüche,
- **dadurch gekennzeichnet, dass**
- die Absorberschicht (16) sowohl oberhalb als auch unterhalb der Speicherschicht (18) angeordnet ist.

## Claims

1. Padding device (10), such as a padding support, padding cushion or the like, having
- a top side (30), a bottom side (32) and side walls (34) which encircle an outer periphery between the top side (30) and the bottom side (32), having
- a covering layer (12) which surrounds the top side (30), the side walls (34) and the bottom side (32),
- a padding layer (14) which is arranged under the top-side covering layer (12), wherein
- at least the top side of the covering layer (12) is of light-permeable configuration,
- at least the top side of the padding layer (14) is of light-permeable configuration,
- a heat-absorbing, in particular flexible, absorber layer (16) is arranged at least in certain regions below the padding layer (14) and a solar thermal storage layer (18) which is operatively connected to the absorber layer (16) and which comprises phase change material, so-called PCM material, is arranged below or above the absorber layer (16), or a functional layer (19) composed of integrated absorber material and solar thermal phase change material, so-called PCM material, is configured at least in certain regions below the padding layer (14).

2. Padding device according to Claim 1,
- **characterized in that**
- an insulation layer (20) is arranged below the solar thermal storage layer (18) or the functional layer (19).

3. Padding device according to Claim 1 or 2,
- **characterized in that**
- the padding layer (14) is configured as 3D formed-loop knitted spacer fabrics or formed-loop knitted spacer textile fabrics and/or the insulation layer (20) is configured as a single-layer or multi-layer nonwoven or as 3D formed-loop knitted spacer fabrics or formed-loop knitted spacer textile fabrics.

4. Padding device according to Claims 1-3,
- **characterized in that**
- the storage layer (18)/functional layer (19) is configured as a single-layer or multi-layer PCM drawn-loop knitted fabric.

5. Padding device according to Claims 1-3,
- **characterized in that**
- the storage layer (18)/functional layer (19) has closed cavities into which, in particular pulverulent, PCM material is worked/filled.

6. Padding device according to Claim 5,
- **characterized in that**
- the cavities are configured as closed tube/channel structures which are present in grid-like form, which are arranged in particular between two layers delimiting the cavities and which are filled with PCM material.

7. Padding device according to Claim 5,
- **characterized in that**
- the cavities are configured as closed nub structures which are present in grid-like form, which are arranged in particular between two layers delimiting the cavities and which are filled with PCM material.

8. Padding device according to Claims 5-7,
- **characterized in that**
- the bottom side of the padding layer (14) has downwardly open, in particular embossed, cutouts which at least in certain regions receive the outer periphery contour of the tube/channel structure or of the nub structure of the storage layer (18) or functional layer (19), and/or the top side of the insulation layer (20) has upwardly open, in particular embossed, cutouts which at least in certain regions receive the outer periphery contour of the tube/channel structure or of the nub structure of the storage layer (18) or functional layer (19).

9. Padding device according to Claims 1-3,
- **characterized in that**
- the storage layer (18)/functional layer (19) has an, in particular flexible, supporting layer which is configured in an areal or grid-like manner and on which/to which the PCM material is applied.

10. Padding device according to Claim 9,
- **characterized in that**
- the supporting layer is composed of plastic, in particular polyester.

11. Padding device according to Claim 9 or 10,
- **characterized in that**
- the areal supporting layer has webs arranged in a grid-like manner with recesses which are present between the webs and which have the peripheral contours determined and predefined by the webs, wherein the recesses are filled areally with the PCM material.

12. Padding device according to Claim 9 or 10,
- **characterized in that**
- the grid-like supporting layer is arranged within a PCM material layer.

13. Padding device according to one or more of the preceding claims,
- **characterized in that**
- the absorber layer (16) is configured as a single-layer or multi-layer nonwoven or woven fabric unit.

14. Padding device according to one or more of the preceding claims,
- **characterized in that**
- the absorber layer (16)/functional layer (19) has a light-absorbing colour, in particular a black colour.

15. Padding device according to one or more of the preceding claims,
- **characterized in that**
- a spacer layer (22) is arranged below the insulation layer (20).

16. Padding device according to one or more of the preceding claims,
- **characterized in that**
- the covering layer (12) is configured as a woven fabric layer or carrier layer, in particular composed of textile or plastics fibres, and is coated on the top side with light-permeable material, in particular silicone or plastic, in particular polyurethane.

17. Padding device according to Claim 3,
- **characterized in that**
- the formed-loop knitted spacer fabrics of the padding layer (14) and/or insulation layer (14, 20) have at least one top layer which is formed from monofilaments.

18. Padding device according to one or more of the preceding claims,
- **characterized in that**
- the covering layer (12) is configured as a membrane layer which, on the one hand, is of water-tight configuration, such that no water can penetrate into the interior of the padding device (10), and which, on the other hand, is vapour-permeable, such that vapour produced during heating can diffuse towards the outside, or under the covering layer (12) a membrane layer of this kind is arranged separately, such that no moisture whatsoever can penetrate into the padding device.

19. Padding device according to one or more of the preceding claims,
- **characterized in that**
- the storage layer (18)/functional layer (19) is surrounded at least on the top side or on the top and bottom sides by a water-impermeable but vapour-permeable membrane layer.

20. Padding device according to one or more of the preceding claims,
- **characterized in that**
- the absorber layer (16) is arranged both above and below the storage layer (18).

## Revendications

1. Dispositif de rembourrage (10), tel qu'un matelas de rembourrage, un coussin de rembourrage ou similaire comprenant
- un côté supérieur (30), un côté inférieur (32) et des parois latérales (34) s'étendant à la périphérie extérieure entre le côté supérieur (30) et le côté inférieur (32),
- une couche de recouvrement (12) entourant le côté supérieur (30), les parois latérales (34) et le côté inférieur (32),
- une couche de rembourrage (14) disposée sous la couche de recouvrement côté supérieur (12),
- la couche de recouvrement (12) étant conçue pour être transparente au moins du côté supérieur,
- la couche de rembourrage (14) étant conçue pour être transparente au moins du côté supérieur,
- une couche absorbante (16), en particulier flexible, absorbant la chaleur étant disposée au moins par endroits au-dessous de la couche de rembourrage (14) et une couche accumulatrice thermosolaire (18), qui est reliée fonctionnellement à la couche absorbante (16) et qui comporte un matériau à changement de phase, appelé matériau PCM, étant disposée au-dessous ou au-dessus de la couche absorbante (16) ou une couche fonctionnelle (19) en matériau absorbeur intégré et en matériau à changement de phase thermosolaire, appelé matériau PCM, étant formée au moins par endroits sous la couche de rembourrage (14).

2. Dispositif de rembourrage selon la revendication 1,
- **caractérisé en ce que**
- une couche d'isolation (20) est disposée au-dessous de la couche accumulatrice thermosolaire (18) ou de la couche fonctionnelle (19).

3. Dispositif de rembourrage selon la revendication 1 ou 2,
- **caractérisé en ce que**
- la couche de rembourrage (14) est réalisée sous la forme de tissu intercalaire tricoté 3D ou de tissu textile intercalaire tricoté et/ou la couche d'isolation (20) est réalisée sous la forme d'un non-tissé monocouche ou multicouche ou d'un tissu intercalaire tricoté 3D ou d'un tissu textile intercalaire tricoté.

4. Dispositif de rembourrage selon les revendications 1 à 3,
- **caractérisé en ce que**
- la couche accumulatrice (18)/couche fonctionnelle (19) est réalisée sous la forme d'un tricot PCM monocouche ou multicouche.

5. Dispositif de rembourrage selon les revendications 1 à 3,
- **caractérisé en ce que**
- la couche accumulatrice (18)/couche fonctionnelle (19) comporte des cavités fermées dans lesquelles un matériau PCM, notamment pulvérulent, est incorporé/déversé.

6. Dispositif de rembourrage selon la revendication 5,
- **caractérisé en ce que**
- les cavités sont réalisées sous la forme de structures de tuyaux/canaux fermées qui se présentent sous la forme d'une trame, notamment entre deux couches délimitant les cavités, et qui sont remplies de matériau PCM dans le matériau.

7. Dispositif de rembourrage selon la revendication 5,
- **caractérisé en ce que**
- les cavités sont réalisées sous la forme de structures à boutons de fibres fermées qui se présentent sous la forme d'une trame, notamment entre des couches délimitant les cavités, et qui sont remplies de matériau PCM.

8. Dispositif de rembourrage selon les revendications 5 à 7,
- **caractérisés en ce que**
- la couche de rembourrage (14) comporte des évidements ouverts vers le bas, en particulier produits par empreinte, du côté inférieur, qui reçoivent au moins par endroits le contour périphérique extérieur de la structure de tuyaux/canaux ou de la structure à boutons de fibres de la couche accumulatrice (18) ou de la couche fonctionnelle (19) et/ou la couche d'isolation (20) comporte des évidements ouverts vers le haut, en particulier produits par empreinte, du côté supérieur, qui reçoivent au moins par endroits le contour périphérique extérieur de la structure de tuyaux/canaux ou de la structure à boutons de fibres de la couche accumulatrice (18) ou de la couche fonctionnelle (19).

9. Dispositif de rembourrage selon les revendications 1 à 3,
- **caractérisé en ce que**
- la couche accumulatrice (18)/couche fonctionnelle (19) comporte une couche de support, notamment flexible, qui est conçue pour être sensiblement bidimensionnelle ou en forme de grille, sur/contre laquelle le matériau PCM est appliqué.

10. Dispositif de rembourrage selon la revendication 9,
- **caractérisé en ce que**
- la couche de support est en matière synthétique, notamment en polyester.

11. Dispositif de rembourrage selon la revendication 9 ou 10,
- **caractérisé en ce que**
- la couche de support sensiblement bidimensionnelle comporte des nervures disposées selon une trame et pourvues de creux ménagés entre les nervures et comportant les contours périphériques spécifiés et déterminés par les nervures, les creux étant remplis de matériau PCM en termes de surface.

12. Dispositif de rembourrage selon la revendication 9 ou 10,
- **caractérisé en ce que**
- la couche de support en forme de grille est disposée à l'intérieur d'une couche de matériau PCM.

13. Dispositif de rembourrage selon une ou plusieurs des revendications précédentes,
- **caractérisé en ce que**
- la couche absorbante (16) est réalisée sous la forme d'un non-tissé ou d'une unité de tissé monocouche ou multicouche.

14. Dispositif de rembourrage selon une ou plusieurs des revendications précédentes,
- **caractérisé en ce que**
- la couche absorbante (16)/couche fonctionnelle (19) a une couleur absorbant la lumière, en particulier la couleur noire.

15. Dispositif de rembourrage selon une ou plusieurs des revendications précédentes,
- **caractérisé en ce que**
- une couche intercalaire (22) est disposée au-dessous de la couche d'isolation (20).

16. Dispositif de rembourrage selon une ou plusieurs des revendications précédentes,
- **caractérisé en ce que**
- la couche de recouvrement (12) est réalisée sous la forme d'une couche de tissu ou d'une couche de support, notamment en fibres textiles ou de matière synthétique, et est revêtue du côté supérieur d'un matériau laissant passer la lumière, notamment du silicone ou de la matière synthétique, notamment du polyuréthane.

17. Dispositif de rembourrage selon la revendication 3,
- **caractérisé en ce que**
- le tissu intercalaire de la couche de rembourrage (14) et/ou de la couche d'isolation (14, 20) comporte au moins une couche de dessus qui est formée de monofilaments.

18. Dispositif de rembourrage selon une ou plusieurs des revendications précédentes,
- **caractérisé en ce que**
- la couche de revêtement (12) est conçue comme une couche de membrane, qui est conçue d'une part pour être étanche à l'eau de sorte que l'eau ne puisse pas pénétrer à l'intérieur du dispositif de rembourrage (10), et d'autre part pour être perméable à la vapeur de sorte que la vapeur générée lors de l'échauffement peut se diffuser vers l'extérieur, ou au-dessous de la couche de recouvrement (12), une telle couche de membrane est disposée séparément de sorte que l'humidité ne puisse pas pénétrer dans le dispositif de rembourrage.

19. Dispositif de rembourrage selon une ou plusieurs des revendications précédentes,
- **caractérisé en ce que**
- la couche accumulatrice (18)/couche fonctionnelle (19) est entourée par une couche de membrane imperméable à l'eau mais perméable à la vapeur au moins du côté supérieur ou du côté supérieur et du côté inférieur.

20. Dispositif de rembourrage selon une ou plusieurs des revendications précédentes,
- **caractérisé en ce que**
- la couche absorbante (16) est disposée au-dessus et au-dessous de la couche accumulatrice (18).
